# EUROPÄISCHE PATENTSCHRIFT

(11) **EP 3 856 604 B1**
(45) Veröffentlichungstag und Bekanntmachung des Hinweises auf die Patenterteilung: **14.02.2024**
(21) Anmeldenummer: 19801696.6
(22) Anmeldetag: 28.10.2019
(51) Int. Cl.: B61D 17/22, B61D 17/02

(54) **SCHIENENFAHRZEUG ZUR PERSONENBEFÖRDERUNG MIT WAGENÜBERGANG**
RAIL VEHICLE FOR PASSENGER TRANSPORT, WITH GANGWAY CONNECTION
VÉHICULE FERROVIAIRE POUR LE TRANSPORT DE PERSONNES AVEC JONCTION

(30) Priorität: 27.11.2018 DE 102018220360
(43) Veröffentlichungstag der Anmeldung: 04.08.2021
(73) Patentinhaber: Siemens Mobility GmbH, 81739 München (DE)
(72) Erfinder: GAGEIK, Manuel Alexander, 45472 Mülheim an der Ruhr (DE); RÜTER, Arnd, 47802 Krefeld (DE); SCHMIDT, Jörg, 47441 Moers (DE)
(74) Vertreter: Siemens Patent Attorneys
(86) Internationale Anmeldenummer: PCT/EP2019/079328
(87) Internationale Veröffentlichungsnummer: WO 2020/108898

(56) Entgegenhaltungen:
- EP-A1- 0 336 809
- EP-A2- 1 852 326
- DE-A1-102011 003 025
- JP-A- H0 565 063
- US-A- 2 468 590

## Beschreibung

Die Erfindung bezieht sich auf ein Schienenfahrzeug zur Personenbeförderung nach dem Oberbegriff von Anspruch 1.

Danach ist ein Schienenfahrzeug zur Personenbeförderung vorgesehen, mit wenigstens zwei Wagen und einem zwischen einander gegenüberliegenden Wagenenden der zwei Wagen angeordneten Wagenübergang, der einen Wellenbalg umfasst, der über einen Anbaurahmen an eines der Wagenenden angeschlossen ist, wobei der Anbaurahmen und der Wellenbalg jeweils eine Mantelfläche mit einer Unterseite aufweisen, die gegenüber einer Unterseite einer Mantelfläche des Wagenendes versetzt ist, Oberseiten der Mantelflächen des Anbaurahmens und des Wellenbalgs mit einer Oberseite des Wagenendes fluchten und ein vertikaler Versatz zwischen einer Unterseite der Mantelfläche des Anbaurahmens und einer Unterseite der Mantelfläche des Wagenendes durch eine allgemein rampenförmige Komponente ausgeglichen ist.

Ein solches Schienenfahrzeug ist aus der US 2 468 590 A bekannt.

Beim Betrieb von Schienenfahrzeugen, insbesondere für den Hochgeschwindigkeitsverkehr, spielt der Fahrwiderstand des Fahrzeugs eine erhebliche Rolle im Hinblick darauf, mit welchem Energieverbrauch des Schienenfahrzeugs zu rechnen ist. Dieser Energieverbrauch skaliert mit der Geschwindigkeit des Schienenfahrzeugs zum Quadrat und ist daher gerade im Hochgeschwindigkeitsverkehr besonders wichtig und muss gering gehalten werden. Insbesondere sind Prallflächen, d. h. exponierte Flächen in Fahrtrichtung, in der Außenkontur des Schienenfahrzeugs möglichst zu vermeiden. Die Gefahr, dass Prallflächen an der Außenkontur des Schienenfahrzeugs vorliegen, ist insbesondere im Bereich des Wagenübergangs gegeben. Dabei ist zu berücksichtigen, dass die eingesetzten Anbaurahmen und Wellenbälge herstellungsbedingten Toleranzen unterliegen. Um auszuschließen, dass sich nach außen vorstehende Prallflächen ergeben, ist es bekannt, eine Minimierung der Fertigungstoleranzen vorzunehmen, insbesondere die Fertigtoleranzen so auszulegen, dass der Wellenbalg nicht über die Wagenkästen hinausragt. Daher werden die Fertigungstoleranzen mit genügend Sicherheit nach innen ausgelegt, so dass häufig ein Versatz nach innen vorliegt, welcher strömungstechnisch weniger nachteilig ist als ein Versatz nach außen. Typische Werte für den Versatz zwischen den Anbaurahmen einerseits und den Wagenenden andererseits liegen im Bereich von mehreren Zentimetern.

Ausgehend hiervon liegt der Erfindung die Aufgabe zugrunde, einen Wagenübergangsbereich des Schienenfahrzeugs strömungstechnisch günstiger zu gestalten, so dass ein Fahrwiderstand vermindert wird.

Diese Aufgabe wird bei dem eingangs genannten Schienenfahrzeug durch die Merkmale des kennzeichnenden Teils des Anspruchs 1 gelöst.

Danach ist vorgesehen, dass der Anbaurahmen in Querrichtung des Schienenfahrzeugs mittig an das Wagenende angesetzt ist und ein Versatz zwischen seitlichen Mantelflächen des Wagenendes und seitlichen Mantelflächen des Anbaurahmens durch weitere rampenförmige Komponenten ausgeglichen ist.

Somit wird eine Oberseite eines der Anbaurahmen auf die Oberseite des angrenzenden Wagenendes ausgerichtet, so dass es hier zu keinem Versatz kommt. Es wird somit an der Oberseite des Schienenfahrzeugs auch im Bereich des Wagenübergangs eine Konturbündigkeit realisiert, und zwar allein durch passende Ausrichtung von Anbaurahmen und Wagenkastenende zueinander.

Aufgrund der Fertigungstoleranzen ergibt sich dann ein vertikaler Versatz an der Unterseite des Schienenfahrzeugs, insbesondere zwischen Wagenende und angrenzendem Anbaurahmen, so dass sich hier eine Stufe ergibt. Diese an sich strömungsungünstige Stufe wird durch die vorgesehene, allgemein rampenförmige und strömungsgünstigere Komponente ausgeglichen, so dass sich auch auf einer Unterseite des Wagenübergangsbereichs eine geeignete Konturbündigkeit ergibt. Dabei kann der vertikale Versatz des Anbaurahmens zum Wagenende sowohl nach innen als auch nach außen vorliegen.

Die rampenförmige Komponente ist bevorzugt aus einem formbaren Material, beispielsweise Sicaflex, hergestellt. In dieser Weise ist es möglich, im Zuge einer aktuellen Montage des Anbaurahmens an einem Wagenkastenende die rampenförmige Komponente genauso zu dimensionieren, dass sich eine optimale Konturbündigkeit ergibt. Auch trägt die rampenförmige Komponente zur Dichtigkeit zwischen Wagenende und Anbaurahmen bei. Statt eines formbaren Materials können aber auch starre Bleche zur Ausbildung der hier beschriebenen rampenförmigen Komponenten zum Einsatz kommen.

Insofern ist es vorteilhafterweise vorgesehen, dass die allgemein rampenförmige Komponente in einen sich aufgrund des vertikalen Versatzes zwischen der Unterseite der Mantelfläche des Anbaurahmens und der Unterseite der Mantelfläche des Wagenendes ergebenden Stufenbereich eingesetzt ist und zum Schaffen einer Konturbündigkeit zwischen dem Wagenende und der von dem Wagenende abgewandten Stirnseite des angrenzenden Anbaurahmens ausgebildet ist.

Bevorzugt ist eine Unterseite der allgemein rampenförmigen Komponente hinsichtlich ihres Strömungswiderstands optimiert. Im Einzelnen sollte die Unterseite so beschaffen sein, dass sich bei einem in Fahrt befindlichen Schienenfahrzeug möglichst ein Minimum für den Fahrwiderstand ergibt.

In einer Variante ist es bevorzugt, wenn eine Unterseite der allgemein rampenförmigen Komponente im Querschnitt S-förmig ausgebildet ist. Diese Form zeichnet sich durch einen geringen Strömungswiderstand für das in Fahrt befindliche Schienenfahrzeug aus.

Es ist vorgesehen, dass der Anbaurahmen in Querrichtung des Schienenfahrzeugs mittig an die Wagenenden angesetzt ist und ein Versatz zwischen seitlichen Mantelflächen des Wagenendes und seitlichen Mantelflächen des Anbaurahmens durch weitere rampenförmige Komponenten ausgeglichen ist. Die Einbausituation für die Anbaurahmen ist hier derjenigen vergleichbar, wie sie an der Unterseite des Wagenübergangsbereichs vorliegt. Aus diesem Grunde gelten die oben erläuterten Gesichtspunkte für die Auslegung der rampenförmigen Komponente an der Unterseite des Wagenübergangs denjenigen an den seitlichen Mantelflächen der Wagenenden / der Anbaurahmen.

Vorgenannte Vorteile hinsichtlich des erwartbaren Fahrwiderstands wirken sich besonders bei Hochgeschwindigkeitszügen aus.

Ein Ausführungsbeispiel der Erfindung wird nachfolgend unter Bezugnahme auf die Zeichnungen noch näher erläutert.

Es zeigen
- Figur 1: eine schematische Längsschnittansicht eines Wagenübergangsbereichs eines Schienenfahrzeugs,
- Figur 2: eine schematische Längsschnittansicht einer Einzelheit des Wagenübergangsbereichs von Figur 1 und
- Figur 3: eine Ansicht auf den Wagenübergangsbereich von Fig. 1.

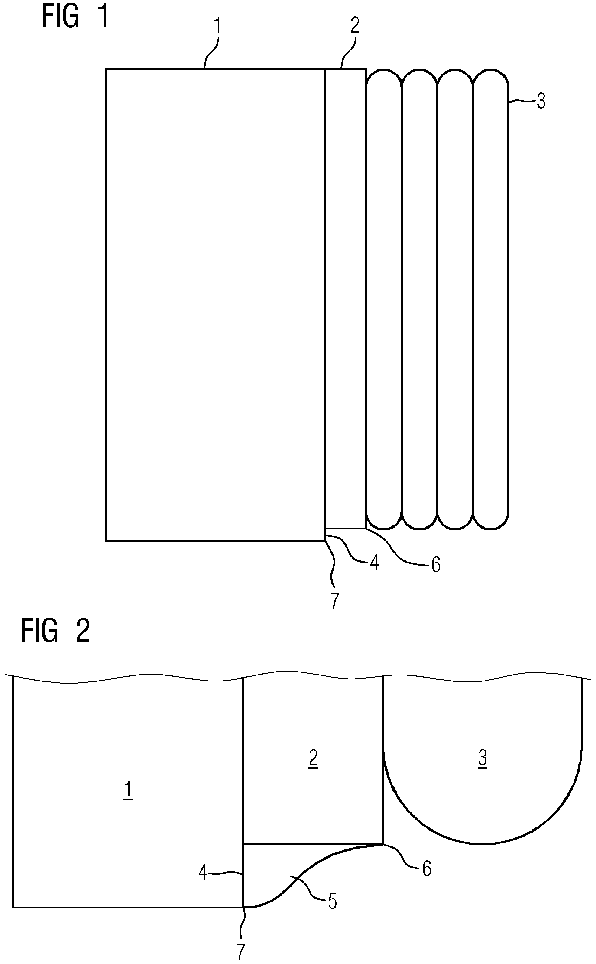

Figur 1 zeigt ein Wagenende 1 eines Hochgeschwindigkeitszuges (Vmax > 190 km/h, auf einer Schnellfahrstrecke Vmax > 250 km/h) als Beispiel für ein Schienenfahrzeug zur Personenbeförderung, wobei eine Anwendbarkeit der nachstehend beschriebenen technischen Merkmale auch bei Fahrzeugen mit niedrigeren Betriebsgeschwindigkeiten, z. B. Vmax 150 km/h, gegeben ist. An einer Stirnseite des Wagenendes 1 schließt sich ein Anbaurahmen 2 für ein Wellenbalg 3 an. Der Anbaurahmen 2 ist beispielsweise mit der Stirnseite des Wagenendes 1 verschraubt (Anschraubrahmen), während der Wellenbalg 3 typischer Weise mittels eines Klemmprofils an dem Anbaurahmen 2 befestigt ist. Sowohl der Anbaurahmen 2 als auch der Wellenbalg 3 besitzen eine äußere Mantelfläche, die durchgehend innerhalb einer äußeren Mantelfläche des Wagenendes 1 liegt.

Der Anbaurahmen 2 ist an der Oberseite seiner Mantelfläche derart ausgerichtet, dass er auf demselben Höhenniveau liegt, wie eine Oberseite der Mantelfläche des Wagenendes 1. Insofern liegt an der Oberseite des Wagenübergangsbereichs kein Versatz zwischen dem Wagenende 1 und dem Anbaurahmen 2 vor. Es liegt somit in diesem Bereich Konturbündigkeit vor.

Auf seiner in Fig. 1 freien Seite ist der Wellenbalg 3 über einen weiteren Anbaurahmen (nicht dargestellt) an ein angrenzendes Wagenende des Hochgeschwindigkeitszuges angeschlossen. Insbesondere für einen Zweirichtungsbetrieb des Hochgeschwindigkeitszuges kann der weitere Anbaurahmen so gestaltet und ausgerichtet sein wie der Anbaurahmen 2.

Figur 2 zeigt die Situation an der Unterseite des Wagenübergangsbereichs, bei der der Anbaurahmen 2 und der Wellenbalg 3 jeweils eine Mantelfläche mit einer Unterseite aufweisen, die gegenüber einer Unterseite einer Mantelfläche des Wagenendes 1 nach innen versetzt ist. Dort ergibt sich in vertikaler Richtung ein Versatz 4, so dass zwischen der dem Anbaurahmen 2 zugewandten Stirnseite des Wagenendes 1 und der dem Wagenende 1 zugewandten Stirnseite des Anbaurahmens 2 eine Stufe entsteht. In diese Stufe ist eine allgemeine rampenförmige Komponente 5 für einen Ausgleich des Versatzes 4 eingesetzt und dort befestigt. Diese Komponente ist aus Sicaflex und damit aus einem verformbaren Material hergestellt. Aufgrund einer stärkeren Verwirbelung und Verlustbehaftung der anströmenden Luft an der Unterseite des Wagenübergangsbereiches im Vergleich zu dessen Oberseite, wird auf der Oberseite auf eine rampenförmige Komponente bewusst verzichtet und dort ein Versatz vermieden.

Die Verformbarkeit des Materials gestattet es, in einer aktuellen Montagesituation die konkreten Fertigungstoleranzen des Anbaurahmens 2 zu berücksichtigen und auch auf der Unterseite des Wagenübergangsbereichs eine Konturbündigkeit zu realisieren. Die rampenförmige Komponente 5 hat eine im Querschnitt S-förmige Außenfläche und erstreckt sich von einer unteren Kante 6 der dem Wellenbalg 3 zugewandten Stirnseite des Anbaurahmens 2 aus bis zu einer unteren Kante 7 der Stirnfläche des Wagenendes 1. In dieser Weise ist eine strömungsgünstige Kontur für den Längsabschnitt des Schienenfahrzeugs geschaffen, der das Wagenkastenende 1, den Anbaurahmen 2 und den Wellenbalg 3 umfasst. Insbesondere kann auch der weitere Anbaurahmen ebenfalls mit einer rampenförmigen Komponente ausgestattet sein.

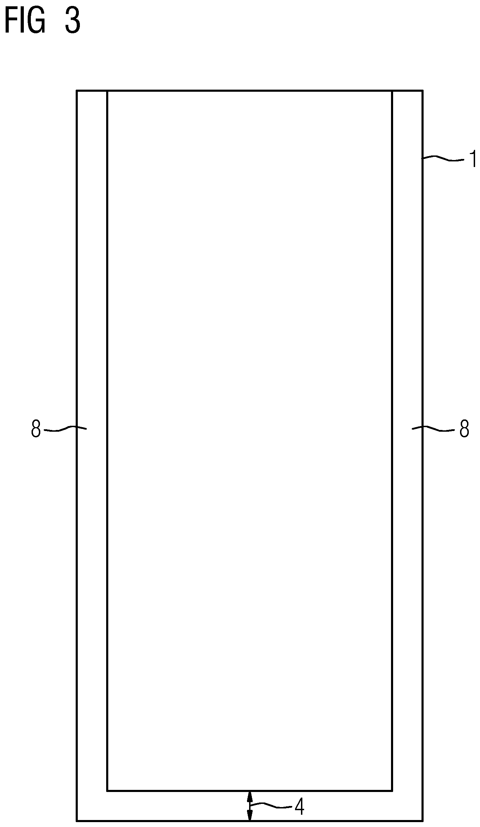

Wie aus Figur 3 hervorgeht, ist der Anbaurahmen 2 in Querrichtung des Schienenfahrzeugs mittig an das Wagenende 1 gesetzt. Dadurch ergeben sich weitere, jeweils seitlich des Anbaurahmens 2 gelegene Versätze 8 zwischen dem Wagenende 1 und dem Anbaurahmen 2. Diese Stufen werden durch weitere Komponenten ausgeglichen, die funktionell der oben näher im Detail beschriebenen rampenförmigen Komponente 5 entsprechen.

## Patentansprüche

1. Schienenfahrzeug zur Personenbeförderung, mit wenigstens zwei Wagen und einem zwischen einander gegenüberliegenden Wagenenden der zwei Wagen angeordneten Wagenübergang, der einen Wellenbalg (3) umfasst, der über einen Anbaurahmen (2) an eines der Wagenenden (1) angeschlossen ist, wobei
der Anbaurahmen (2) und der Wellenbalg (3) jeweils eine Mantelfläche mit einer Unterseite aufweisen, die gegenüber einer Unterseite einer Mantelfläche des Wagenendes (1) versetzt ist, Oberseiten der Mantelflächen des Anbaurahmens (2) und des Wellenbalgs (3) mit einer Oberseite des Wagenendes (1) fluchten und ein vertikaler Versatz (4) zwischen einer Unterseite der Mantelfläche des Anbaurahmens (2) und einer Unterseite der Mantelfläche des Wagenendes (1) durch eine allgemein rampenförmige Komponente (5) ausgeglichen ist, **dadurch gekennzeichnet, dass**
der Anbaurahmen (2) in Querrichtung des Schienenfahrzeugs mittig an das Wagenende (1) angesetzt ist und ein Versatz zwischen seitlichen Mantelflächen des Wagenendes (1) und seitlichen Mantelflächen des Anbaurahmens(2) durch weitere rampenförmige Komponenten ausgeglichen ist.

2. Schienenfahrzeug nach Anspruch 1,
**dadurch gekennzeichnet, dass**
die rampenförmige Komponente (5) aus einem formbaren Material hergestellt ist.

3. Schienenfahrzeug nach einem der Ansprüche 1 oder 2,
**dadurch gekennzeichnet, dass**
die allgemein rampenförmige Komponente (5) in einen sich aufgrund des vertikalen Versatzes (4) zwischen der Unterseite der Mantelfläche des Anbaurahmens (2) und der Unterseite der Mantelfläche des Wagenendes (1) ergebenden Stufenbereich eingesetzt ist und zum Schaffen einer Konturbündigkeit zwischen dem Wagenende (1) und der von dem Wagenende (1) abgewandten Stirnseite des angrenzenden Anbaurahmens (2) ausgebildet ist.

4. Schienenfahrzeug nach Anspruch 3,
**dadurch gekennzeichnet, dass**
eine Unterseite der allgemein rampenförmigen Komponente (5) hinsichtlich ihres Strömungswiderstandes optimiert ist.

5. Schienenfahrzeug nach einem der Ansprüche 3 oder 4,
**dadurch gekennzeichnet, dass**
eine Unterseite der allgemein rampenförmigen Komponente (5) im Querschnitt S-förmig ausgebildet ist.

## Claims

1. Rail vehicle for passenger transport, having at least two carriages and a gangway connection which is arranged between mutually opposite carriage ends of the two carriages and which comprises a corrugated bellows (3) connected to one of the carriage ends (1) by way of an attachment frame (2), wherein the attachment frame (2) and the corrugated bellows (3) each have a shell surface with a bottom side, which is offset in relation to a bottom side of a shell surface of the carriage end (1), top sides of the shell surfaces of the attachment frame (2) and of the corrugated bellows (3) are aligned with a top side of the carriage end (1) and a vertical offset (4) between a bottom side of the shell surface of the attachment frame (2) and a bottom side of the shell surface of the carriage end (1) is compensated by a generally ramp-like component (5),
**characterized in that**
the attachment frame (2) is positioned centrally on the carriage end (1) in a transverse direction of the rail vehicle and an offset between shell surfaces of the carriage end (1) and shell surfaces of the attachment frame (2) is compensated by further ramp-like components (5).

2. Rail vehicle according to Claim 1,
**characterized in that**
the ramp-like component (5) is produced from a formable material.

3. Rail vehicle according to either of Claims 1 and 2,
**characterized in that**
the generally ramp-like component (5) is inserted into a step region produced on account of the vertical offset (4) between the bottom side of the shell surface of the attachment frame (2) and the bottom side of the shell surface of the carriage end (1) and is configured to create a contour flushness between the carriage end (1) and that end side of the adjoining attachment frame (2) which faces away from the carriage end (1).

4. Rail vehicle according to Claim 3,
**characterized in that**
a bottom side of the generally ramp-like component (5) is optimized with regard to its flow resistance.

5. Rail vehicle according to either of Claims 3 and 4,
**characterized in that**
a bottom side of the generally ramp-like component (5) is of S-shaped form in cross section.

## Revendications

1. Véhicule ferroviaire de transport de personnes comprenant au moins deux voitures et un passage entre voitures disposé entre deux extrémités de voitures opposées l'une à l'autre des deux voitures et comprenant un soufflet (3) ondulé qui est raccordé à l'une des extrémités (1) de voiture par un cadre (2) rapporté, dans lequel le cadre (2) rapporté et le soufflet (3) ondulé ont chacun une surface latérale ayant une face inférieure, qui est décalée par rapport à une face inférieure d'une surface latérale de l'extrémité (1) de la voiture, des faces supérieures des surfaces latérales du cadre (2) rapporté et, du soufflet (3) ondulé sont alignées avec une face supérieure de l'extrémité (1) de la voiture et un décalage (4) vertical entre une face inférieure de la surface latérale du cadre (2) rapporté et une face inférieure de la surface latérale de l'extrémité (1) de la voiture est compensé par un composant (5) d'une manière générale en forme de rampe,
**caractérisé en ce que**
le cadre (2) rapporté est rapporté à l'extrémité (1) de la voiture au milieu dans la direction transversale du véhicule ferroviaire et un décalage entre des surfaces latérales de l'extrémité (1) de la voiture et des surfaces latérales du cadre (2) rapporté est compensé par d'autres composants en forme de rampe.

2. Véhicule ferroviaire suivant la revendication 1,
**caractérisé en ce que**
le composant (5) en forme de rampe est fabriqué en un matériau déformable.

3. Véhicule ferroviaire suivant l'une des revendications 1 ou 2,
**caractérisé en ce que**
le composant (5), d'une manière générale en forme de rampe, est inséré dans une partie en palier provenant du décalage (4) vertical entre la face inférieure de la surface latérale du cadre (2) rapporté et la face inférieure de la surface latérale de l'extrémité (1) de la voiture et constitué pour ménager un affleurement de contour entre l'extrémité (1) de la voiture et la face frontale, non tournée vers l'extrémité (1) de la voiture, du cadre (2) rapporté voisin.

4. Véhicule ferroviaire suivant la revendication 3,
**caractérisé en ce que**
une face inférieure du composant (5), d'une manière générale en forme de rampe, est optimisée en ce qui concerne sa résistance à l'écoulement.

5. Véhicule ferroviaire suivant l'une des revendications 3 ou 4,
**caractérisé en ce qu'**
une face inférieure du composant (5), d'une manière générale en forme de rampe, est de section transversale en forme de S.
